Europäisches Patentamt

European Patent Office

Office européen des brevets

(19)

(11) Publication number: **0 260 980**
**A2**

## (12) EUROPEAN PATENT APPLICATION

(21) Application number: **87308264.8**

(22) Date of filing: **18.09.87**

(51) Int. Cl.⁴: **F 16 G 11/12**

(30) Priority: **18.09.86 US 909220**

(43) Date of publication of application:
**23.03.88 Bulletin 88/12**

(84) Designated Contracting States: **DE ES FR GB**

(71) Applicant: **BABCOCK INDUSTRIES INC.**
**425 Post Road**
**Fairfield Connecticut 06430 (US)**

(72) Inventor: **Baumgarten, John M.**
**101 E. McKay No. 4**
**Saline Michigan (US)**

(74) Representative: **Lewis, David Overington**
**c/o Babcock International plc 165 Great Dover Street**
**London SE1 4YA (GB)**

(54) **Constant tension, self-adjusting, cable control device.**

(57) A constant force, self-adjusting, cable control device (Figure 1) comprises a first member 10 and a second member 11 pivoted together at a pivot point 12, a constant diameter coil tension spring 17 arranged to bias the first and second members rotationally together, cables 13, 15 respectively attached to the first and second members and a one-way ratchet latch 23, 24 which automatically releases when there is slack in the cables to permit relative rotation between the first and second members by the effect of the spring 17 until the tension on the cables is re-established. The cable attachment means 14, 15 are positioned radially outwardly and displaced angularly of the spring connections 19, 21 relative to the pivot point 12 so that the spring 17, with a shorter lever arm, has a mechanical disadvantage over the cables 13, 15, which decreases as the members rotate towards each other.

FIG. 1

Bundesdruckerei Berlin

**Description**

## "CONSTANT TENSION, SELF-ADJUSTING, CABLE CONTROL DEVICE".

This invention relates to devices for maintaining tension on a cable system.

In the use of various cable systems involving cables, it is desirable to provide a self adjustment device for automatically adjusting and maintaining tension on the cables.

Prior methods of maintaining tension on cable controls have employed in-line springs with no variation of mechanical advantage such as the mechanism disclosed in United States patent 4,344,518. These mechanisms have been used to applying tension to a cable control through the inner member, the conduit and between the inner member and conduit.

There are two disadvantages of such prior art. The prior systems do not apply a constant force and consequently have a shorter adjustment length for their size. These systems employ a constant displacement ratio of spring movement to system movement. This causes the load applied to the system by the spring to diminish linearly with spring travel. If a small tolerance of system tension is required, the prior art arrangement of tensioning can only be used effectively for an equally small amount of travel.

The prior devices cause the system to be larger and heavier. Arrangements placing the lever arm of the spring force at a mechanical disadvantage are not used. This makes the spring required for a given amount of travel within the tolerance limits larger than would be needed in a system using a mechanical disadvantage.

Among the objectives of the present invention are to provide a self adjusting cable control device that will provide a constant force on the cables, which is small in size, which is less expensive, and which provides a higher spring constant for the volume of the device.

According to the present invention there is provided a constant force, self-adjusting, cable control device comprising a first member and a second member pivoted to one another about a pivot point, a tension spring connected to the first and second members arranged to bias the first member rotationally towards the second member about the pivot point, first and second cable attachment means respectively positioned on the first and second members and co-axially aligned such that the longitudinal axis of the tension spring and the longitudinal axes of the cable attachment means are parallel, with the angle subtended about the pivot point by the points of connection of the spring and the cable attachment means on one member and the pivot point being equal to the angle subtended about the pivot point by the point of connection of the spring and the cable attachment means on the other member, and a one-way latch arranged to permit rotation of the first member relative to the second member in a direction bringing the respective points of connection of the spring the one toward the other but preventing rotation in the opposite direction, the cable attachment means being positioned on the respective members radially outwardly from the pivot point of the respective points of connection of the spring.

The invention will now be described, by way of example, with reference to the accompanying, partly diagrammatic drawings, in which:-

Figure 1 is a plan view of a constant force, self-adjusting, cable control device;

Figure 2 is a sectional view taken on the line II-II in Figure 1;

Figure 3 is a bottom plan view of the device shown in Figure 1;

Figure 4 is a view similar to Figure 1 showing the parts in a different operative position; and

Figures 5 and 6 are diagrams indicating the relative configurations of the device in different operative positions.

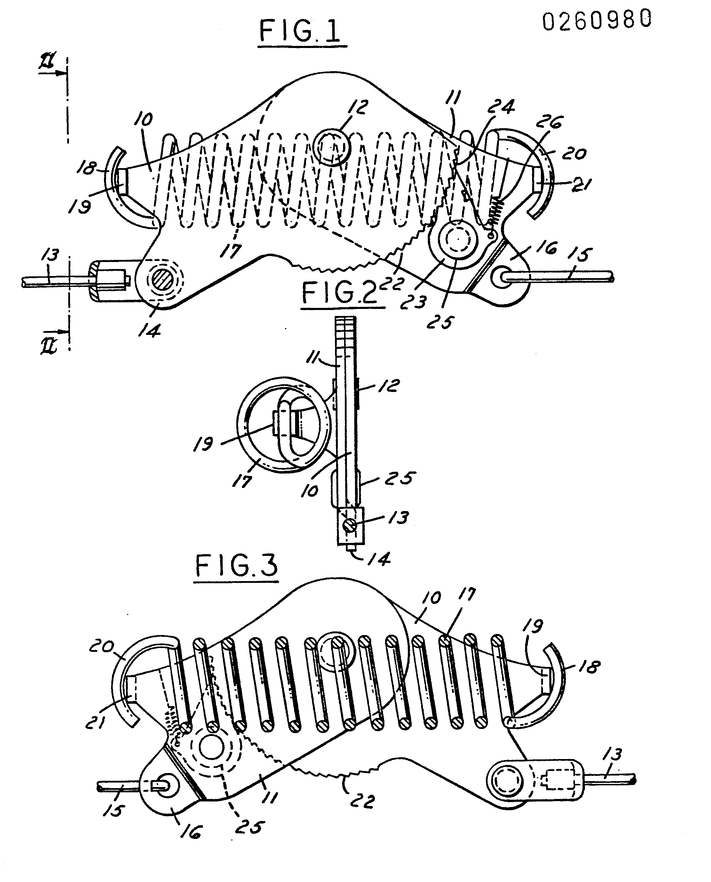

Referring to Figures 1-4, the constant tension, self-adjusting, cable control device comprises first and second generally triangular members 10 and 11 formed as metal stampings and pivoted to one another by a pivot pin 12 constituting a pivot point or axis. A first cable 13 is attached adjustably to a clevis pinned to a projection 14 radially spaced from the pivot point 12 on the first member 10. A second cable 15 is attached directly to a projection 16 radially spaced from the pivot point 12 on the member 11 the projection 16 being offset such that the cables 13, 15 extend co-axially. A constant coil diameter tension spring 17 has one endmost loop 18 engaging a bent-out tab 19 on the member 10 and the other endmost loop 20 engaging a bent-out tab 21 on the member 11.

A one-way latch is provided by an arcuate row of asymmetrical ratchet teeth 22 formed on the edge of the member 10 and a pawl 23 having complementary teeth 24 pivoted on a pin 25 on the member 11. A tension spring 26 resiliently biases the teeth of the pawl into engagement with the teeth of the member 10.

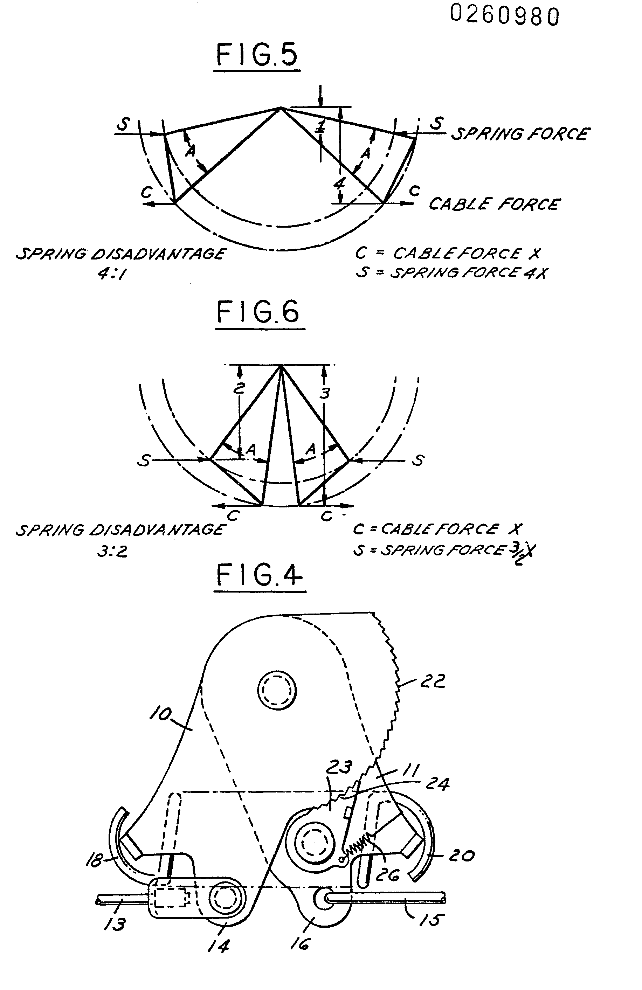

In operation, the device is connected into a cable run, represented by the first and second cables 13, 15, and - after initial adjustment - serves to maintain an initial pre-determined tension in the cable run when the cable run is not transmitting an actuating loading. During use, the cable run will be subject to elongation and associated components will be subject to wear, both of which will reduce the initial tension in the cable run, which will tend to become slack. As slack occurs in the cables 13, 15, the spring 17 functions to cause the members 10 and 11 to rotate toward one another as shown in Figure 4, the pawl 23 ratcheting into and out of engagement with the teeth 22 to permit the rotation until the tension on the cables 13, 15 is re-established at, or approaching, the initial tension.

The device is effective to maintain the tension on the cables 13, 15 substantially constant over a wide range of elongation. As is shown in Figures 5 and 6 the device may be considered as two triangles A formed between the points of connection of the spring 17 and the cable attachments on each member and the pivot 12 rotate about the pivot 12. The spring 17 provides a force S at the tabs 19, 21, in the direciton and of the magnitude indicated. The resultant force C producing tension in the cables 13, 15 is also indicated in direction and magnitude. The triangles can only move towards each other, not apart, due to the ratchet effect of the latch.

Because of the offset between the application of foce S and the pivot 12, the lever arm and consequent mechanical disadvantage decreases as the triangles move towards each other. As the effective length of the spring decreases, the spring force diminishes by an almost proportional amount, the net effect is that the force on the cable remains substantially constant over a wide range of effective elongation of the cable.

Since the configuration utilises a mechanical disadvantage in the lever mechanism, a spring with a higher spring constant can be used, thereby making the device more compact than prior art arrangements in which springs with a low spring constant must be used.

## Claims

1. A constant force, self-adjusting, cable control device comprising a first member and a second member pivoted to one another about a pivot point, a tension spring connected to the first and second members arranged to bias the first member rotationally towards the second member about the pivot point, first and second cable attachment means respectively positioned on the first and second members and co-axially aligned such that the longitudinal axis of the tension spring and the longitudinal axes of the cable attachment means are parallel, with the angle subtended about the pivot point by the points of connection of the spring and the cable attachment means on one member and the pivot point being equal to the angle subtended about the pivot point by the point of connection of the spring and the cable attachment means on the other member, and a one-way latch arranged to permit rotation of the first member relative to the second member in a direction bringing the respective points of connection of the spring the one toward the other but preventing rotation in the opposite direction, the cable attachment means being positioned on the respective members radially outwardly from the pivot point of the respective points of connection of the spring.

2. A constant force, self-adjusting, cable control device as claimed in Claim 1, wherein said tension spring is a coil spring having coils of constant diameter.

3. A constant force, self-adjusting, cable control device as claimed in Claim 2, wherein the first and second members are each formed with a bent-out tab, and endmost portions of said coil spring are looped over a respective tab.

4. A constant force, self-adjusting, cable control device as claimed in any preceding claim, wherein the first and second members are formed as metal stampings pivoted together with the cable attachment means on the first member offset laterally to align with the cable attachment means on the second member.

5. A constant force, self-adjusting, cable control device as claimed in Claim 4, wherein the respective points of connection of the spring are displaced angularly from the cable attachment means on the first and second members relative to the pivot point.

FIG.1

0260980

FIG.2

FIG.3

0260980

## FIG.5

S — SPRING FORCE

CABLE FORCE

SPRING DISADVANTAGE
4:1

C = CABLE FORCE X
S = SPRING FORCE 4X

## FIG.6

SPRING DISADVANTAGE
3:2

C = CABLE FORCE X
S = SPRING FORCE $\frac{3}{2}$X

## FIG.4